# FASCICULE DE BREVET EUROPEEN

(11) **EP 3 486 186 B1**
(45) Date de publication et mention de la délivrance du brevet: **16.12.2020**
(21) Numéro de dépôt: 18206612.6
(22) Date de dépôt: 15.11.2018
(51) Int. Cl.: B65D 3/12, B65B 7/16, B65B 7/28

(54) **ÉLÉMENT D'APPUI EXTENSIBLE, DISPOSITIF ET PROCÉDÉ DE SCELLAGE DE FOND OU DE COUVERCLE D'UN EMBALLAGE EN CARTON**
ERWEITERBARES STÜTZELEMENT, VORRICHTUNG UND VERFAHREN ZUM VERSIEGELN DES BODENS ODER DES DECKELS EINER KARTONVERPACKUNG
EXPANDABLE BEARING ELEMENT, DEVICE AND METHOD FOR SEALING THE BOTTOM OR COVER OF A CARDBOARD PACKAGE

(30) Priorité: 20.11.2017 FR 1760930
(43) Date de publication de la demande: 22.05.2019
(73) Titulaire: Sireix, Georges, 68400 Riedisheim (FR)
(72) Inventeur: Sireix, Georges, 68400 Riedisheim (FR)
(74) Mandataire: Bugnion Genève

(56) Documents cités:
- EP-A1- 0 668 151
- EP-A1- 2 623 306
- EP-A1- 2 738 105
- FR-A1- 2 302 915
- US-A- 5 339 595

## Description

L'invention concerne le domaine de la fabrication d'emballages en carton destinés à recevoir des produits alimentaires. Plus particulièrement, elle concerne un dispositif et procédé de scellage du fond ou d'un couvercle d'un emballage en carton écologiquement conçu.

De façon générale, les emballages en carton destinés à recevoir des produits alimentaires comprennent un corps de boîte de forme générale de révolution, par exemple tubulaire ou polygonale, fait d'une ou plusieurs couches de matériau cartonné, ainsi qu'une structure obturante comprenant un couvercle et une membrane de sécurité assemblés au corps tubulaire de manière étanche. Un fond est assemblé à l'ensemble composé du corps et de la structure obturant après son remplissage avec le produit alimentaire. Un tel emballage et sa fabrication son par exemple connus de EP 2 623 306.

On entend ici par emballages en carton écologiquement conçus des emballages dont au moins 90 à 98% en poids sont constitués de matériaux cellulosiques. Ce type d'emballage comprend, en plus des couches de matériaux cellulosiques, des couches ou revêtements synthétiques dont au moins une des surfaces a reçu sous vide une mince couche métallisée ou d'oxyde de silice destiné à assurer une haute barrière à l'oxygène et à la vapeur d'eau, associés aux matériaux cellulosiques pour former un matériau surfacique composite. Ces revêtements métalliques ou synthétiques constituent, selon une terminologie généralement acceptée, un «matériau barrière » isolant le produit stocké à l'intérieur de l'emballage de l'environnement extérieur, par exemple pour éviter une oxydation, un dessèchement, ou une contamination par des polluants chimiques ou biologiques. Ces revêtements synthétiques sont protégés par un film synthétique de scellage entre deux parties de l'emballage au cours de sa fabrication. Dans ce cas, elles sont généralement qualifiées de « matériau barrière réactivable ».

Pour assembler le corps de boîte au fond ou au couvercle, on applique un procédé dit de scellage. Dans celui-ci, lors d'une première étape, on introduit le fond ou le couvercle prédécoupé à plat dans une matrice d'un outil de scellage. Puis, lors d'une étape de formage on donne la forme requise au fond (par exemple en forme de cuvette) ou au couvercle par action d'un tampon. Par la suite, au cours d'une étape de scellage, on applique un effort important sur le corps pour le serrer contre le fond puis on chauffe le tampon par conduction ou autre procédé de mise en température. L'action combinée de l'effort sur le corps et du chauffage faisant fondre le matériau réactivable (par exemple un adhésif ou un film plastique) permet de créer une adhésion des parois du fond au corps. Lors d'une étape de refroidissement, on fait circuler de l'air dans l'outil de formage afin de refroidir l'ensemble ainsi formé de fond et de corps de boîte. Enfin, on retire l'ensemble assemblé de corps de boîte et de fond ou de couvercle de l'outil de scellage. Un tel procédé est par exemple décrit dans le document EP 0 668 151.

Un outil de façonnage utilisé dans un tel procédé de scellage comprend donc, en plus du tampon de scellage, une matrice ayant pour fonction de donner sa forme lors de son passage dans celle-ci, ainsi qu'une contre-matrice ayant pour fonction d'appliquer sur le corps extérieur de la boîte un effort important nécessaire au scellage du fond.

Dans les installations actuelles, de telles contre-matrices sont de deux types : les contre-matrices rigides et les contre-matrices à joint gonflable. Les contre-matrices rigides sont réalisées en acier usiné avec précision de sorte à assurer un serrage optimal du corps de boîte contre le fond/le couvercle retenu par le tampon de scellage, en prévoyant des dimensions adéquates. Les contre-matrices à joint gonflable comprennent également une partie en acier usiné, dans laquelle on loge un joint torique (O-ring en terminologie anglo-saxonne) en élastomère destiné à être gonflé de sorte à ce qu'il puisse appliquer l'effort nécessaire au scellage.

Ces deux types de matrices présentent cependant des inconvénients. Les contre-matrices rigides ne conviennent notamment pas au scellage de boîtes devant contenir un gaz neutre pour assurer la conservation du produit sur une longue durée, car des micro-fuites peuvent survenir du fait de l'existence de variations d'épaisseur le long du corps de boîte ou du fond/du couvercle que l'usinage, malgré sa précision, ne peut rattraper. En revanche, elles ne sont pas sensibles à la pollution du produit conditionné, l'acier ne retenant par les produits pulvérulents.

A l'inverse, les contre-matrices à joint gonflable permettent d'assurer un serrage constant malgré les éventuelles variations d'épaisseur du corps ou du fond/couvercle, mais elles sont sensibles à la pollution de certains produits conditionnés tels que les poudres (cacao, café, farine, etc.). Elles doivent donc être nettoyées régulièrement pour bien fonctionner. En outre, étant très proche du corps de boîte lors de l'introduction du fond/couvercle dans l'outil, le joint annulaire s'use facilement (notamment par frottement lors du retrait du corps de boîte de l'outil) et doit donc être remplacé fréquemment. Enfin, les contre-matrices à joint gonflable ne permettent pas d'accueillir des corps de boîte d'épaisseurs trop variées du fait du faible potentiel d'extension du joint torique dans son logement.

Le brevet US5339595 concerne une tête pour un dispositif de remplissage d'un conteneur et l'insertion d'un bouchon à l'intérieur du col d'un conteneur en produisant un vide à l'intérieur de la tête. La tête comprend une vessie, retenue par un anneau de rétention, qui s'allonge vers l'intérieur en direction des parois du col du conteneur afin de former un joint périphérique étanche autour du col du conteneur lors de la formation du vide.

Le brevet FR2302915 concerne un dispositif pour l'application d'un couvercle sur un conteneur en matériau flexible par dépose d'un couvercle sur les bords du conteneur puis pliage des bords au moyen d'une jupe annulaire gonflable sous l'effet d'un fluide sous pression.

La demande EP2738105 concerne quant à elle un procédé et une machine d'assemblage de corps tubulaires rigides en matériau cartonné avec une structure obturante.

L'invention a pour but de remédier à ces inconvénients en proposant un élément d'appui extensible selon la revendication 1.

Selon l'invention, l'élément d'appui comprend en outre des lèvres de maintien s'étendant, à partir des extrémités des sections d'extension opposées à la section d'appui, selon une direction sensiblement normale à la direction d'extension.

La forme particulière de l'élément d'appui extensible permet d'éviter les écueils de l'art antérieur. En premier lieu, les sections d'extension confèrent à l'élément d'appui extensible une élasticité permettant l'extension de l'élément d'appui extensible vers le corps de boîte, permettant ainsi de s'adapter aux micro-variations d'épaisseur du corps de boîte ou du fond/couvercle et d'éviter les fuites, mais également d'accueillir des corps de boîtes d'épaisseur variées grâce à un meilleur potentiel d'extension. En outre, la surface d'appui, de par sa forme plane, ne retient pas les poudres, ce qui fait que l'élément d'appui extensible n'a pas à être nettoyé trop fréquemment. En particulier, les poudres peuvent se désolidariser de la surface d'appui lors du retrait de l'élément d'appui extensible dans son logement de la contre-matrice après gonflage. Enfin, la section d'appui permet de transmettre les efforts d'appui sur le corps de boîte de façon uniforme, grâce à la surface d'appui qui assure une bonne transmission des efforts et aux portions de dégagement qui évitent de transmettre des efforts sur les parties du corps de boîte n'étant pas en contact avec le tampon de scellage. De ce fait, les boîtes ne sont pas déformées et de l'élément d'appui extensible s'abîme nettement moins rapidement qu'un joint torique gonflable.

Il devient ainsi possible de réduire les temps de mise au point des matrices de contre-scellage, leur usinage ne devant plus se faire avec des tolérances d'une très grande précision comme dans le cas des matrices de contre-scellage rigides, ainsi que d'éviter les fuites dues aux variations d'épaisseur des corps ou fond/couvercles. De plus, l'installation n'a pas à être nettoyée aussi souvent que celles à contre-matrices à joint toriques gonflables. Enfin, de l'élément d'appui extensible selon l'invention n'a pas à être remplacé aussi fréquemment que des joints toriques.

L'invention permet en outre de conférer aux installations de scellage une grande souplesse d'utilisation, car elle permet un scellage uniforme du périmètre de l'emballage quelle que soit la forme de la boîte et acceptant des variations de son épaisseur. Elle réduit également les coûts de production des emballages du fait de l'entretien réduit de l'outil de scellage.

Selon une caractéristique de l'invention, afin de maintenir fermement l'élément d'appui extensible dans le logement de la matrice de l'outil de scellage, l'élément d'appui extensible comprend en outre des lèvres de maintien extérieur s'étendant, à partir des extrémités des sections d'extension opposées à la section d'appui, selon une direction sensiblement normale à la direction d'extension.

De préférence, afin d'augmenter l'étanchéité assurée par l'élément d'appui extensible lors des phases de mise sous vide, de mise sous basse pression et de mise sous haute pression de la cavité de gonflage, il comprend en outre des lèvres de maintien intérieur s'étendant, à partir des extrémités des sections d'extension opposées à la section d'appui, selon une direction sensiblement normale à la direction d'extension, en s'écartant de la cavité de gonflage.

De préférence, afin d'augmenter la surface de la section d'appui et donc les efforts transmis par l'élément d'appui extensible sur le corps de boîte, la section d'appui comprend une portion de renforcement de forme concave s'étendant dans le sens opposé à la surface d'appui, la portion de renforcement s'étendant par exemple d'une section d'extension à l'autre, vers l'intérieur de la cavité de gonflage.

Selon un mode de réalisation particulier de l'invention adapté au scellage de couvercles sur le corps de boîte, une gorge est pratiquée dans la surface d'appui sur une portion déterminée de la circonférence de l'élément d'appui extensible, la gorge étant par exemple de section semi-circulaire. La présence d'une telle gorge permet de définir un dégagement partiel du profil de l'élément d'appui extensible de sorte à créer une faiblesse de scellage au niveau d'une languette d'ouverture facile d'une membrane du couvercle.

De préférence, afin d'augmenter la surface de la section d'appui et donc les efforts transmis par l'élément d'appui extensible sur le corps de boîte et de sorte à renforcer l'élément d'appui extensible au niveau de la gorge, la section d'appui comprend une portion de renforcement de forme complémentaire à la gorge s'étendant dans le sens opposé à la surface d'appui.

Dans un mode de réalisation particulier de l'invention, les portions de dégagement en biseau forment un chanfrein entre les sections d'extension et la surface d'appui, par exemple réalisant un angle compris entre 20° et 40°, de préférence 30° avec les sections d'extension.

L'invention concerne également un dispositif de scellage d'un couvercle ou d'un fond d'un emballage sur un corps d'emballage comprenant un élément d'appui extensible selon l'invention.

Dans un mode de réalisation particulier de l'invention, le dispositif est défini de manière générale selon la revendication 8.

Dans un mode de réalisation particulier de l'invention, le dispositif de scellage d'un fond comprend des moyens de mise sous vide d'un volume compris entre le corps d'emballage, un produit contenu dans le corps d'emballage et le fond, une fois le corps inséré dans la contre-matrice et le fond inséré dans la matrice.

L'invention concerne également un procédé de scellage selon la revendication 10.

De préférence, le gonflage de l'élément d'appui extensible est effectué par introduction de gaz, par exemple de l'air, ou de fluide caloporteur dans la cavité de gonflage à une pression de gonflage prédéterminée.

Selon un mode de réalisation particulier de l'invention, de manière à renforcer l'étanchéité d'un volume compris entre l'intérieur du corps de boîte lors du formage, un produit contenu dans le corps de boîte et le fond on procède, après l'étape d'introduction du fond ou du couvercle dans la matrice, et avant l'étape de gonflage de l'élément d'appui extensible, à un pré-gonflage de l'élément d'appui extensible pour provoquer l'extension des sections d'extension, de sorte que l'extension des sections d'extension provoque la mise en contact de la surface d'appui contre le corps de boîte, le pré-gonflage de l'élément d'appui extensible étant effectué par introduction de gaz, par exemple de l'air, ou de fluide caloporteur dans la cavité de gonflage à une pression prédéterminée de pré-gonflage inférieure à la pression de gonflage.

Selon un mode de réalisation particulier de l'invention, de manière à éviter un descellement du fond ou du couvercle avec le corps de boîte au moment du retrait du tampon de scellage ayant servi à mettre en forme le couvercle/fond lors de l'étape de refroidissement, on procède, après l'étape de gonflage de l'élément d'appui extensible, et avant l'étape de mise sous vide de l'élément d'appui extensible, à une étape de dégonflage partiel de l'élément d'appui extensible, dans lequel la pression du gaz ou du fluide caloporteur introduit dans la cavité de gonflage est réduite à une valeur prédéterminée inférieure à la pression de gonflage. En effet, le dégonflage partiel et non total permet de faire en sorte que l'élément d'appui extensible continue à exercer une pression sur la circonférence du corps de boîte au moment du retrait du tampon de scellage, ce qui évite le descellement du couvercle ou du fond avec le corps d'emballage durant l'étape de refroidissement.

Selon un mode de réalisation particulier de l'invention, particulièrement adapté au scellage de fond sur un corps de boîte devant contenir un gaz neutre pour assurer la conservation du produit sur une longue durée, on procède, après introduction d'un fond ou d'un couvercle dans une matrice et avant l'étape gonflage de l'élément d'appui extensible, à la séquence d'étapes suivantes :
- mise sous vide d'un volume compris entre le corps d'emballage, un produit contenu dans le corps d'emballage le fond,;
- introduction d'un gaz inerte dans ledit volume, par exemple de l'azote.

D'autres caractéristiques et avantages de l'invention ressortiront à la lecture de la description qui suit, en référence aux figures annexées, dans laquelle :
- la figure 1 est une vue en coupe transversale d'un outil de scellage d'une installation de fabrication d'un emballage en carton selon l'invention ;
- la figure 2 est une vue similaire à la figure 1 dans laquelle l'outil de scellage réalise une étape de mise sous vide de l'emballage ;
- la figure 3 est une vue en perspective d'une section d'un élément d'appui extensible de l'outil de scellage de la figure 1 selon un premier mode de réalisation de l'invention ;
- la figure 4 est une vue similaire à la figure 3 d'un élément d'appui extensible selon un deuxième mode de réalisation de l'invention ;
- la figure 5 est une vue similaire à la figure 1 dans laquelle l'outil de scellage réalise une étape de formage d'un fond d'emballage ;
- la figure 6 est une vue similaire à la figure 1 dans laquelle l'outil de scellage réalise une étape de scellage d'un fond d'emballage à un corps d'emballage ;
- la figure 7 est une vue similaire à la figure 1 dans laquelle l'outil de scellage réalise une étape de refroidissement du fond d'emballage ;
- la figure 8 est une vue similaire à la figure 1 dans laquelle l'outil de scellage réalise une étape d'extraction du corps d'emballage ;
- la figure 9 est une vue similaire à la figure 1 dans laquelle l'outil de scellage est utilisé pour le formage d'un couvercle d'emballage en carton ;
- la figure 10 est une vue similaire à la figure 9 dans laquelle l'outil de scellage réalise une étape de formage d'un couvercle d'emballage en carton ;
- la figure 11 est une vue similaire à la figure 3 d'un élément d'appui extensible selon un troisième mode de réalisation de l'invention ;
- la figure 12 est une vue similaire à la figure 3 d'un élément d'appui extensible selon un quatrième mode de réalisation de l'invention ;
- les figures 13A à 13F sont des vues de dessus des différentes variantes d'éléments d'appui extensibles selon l'invention.

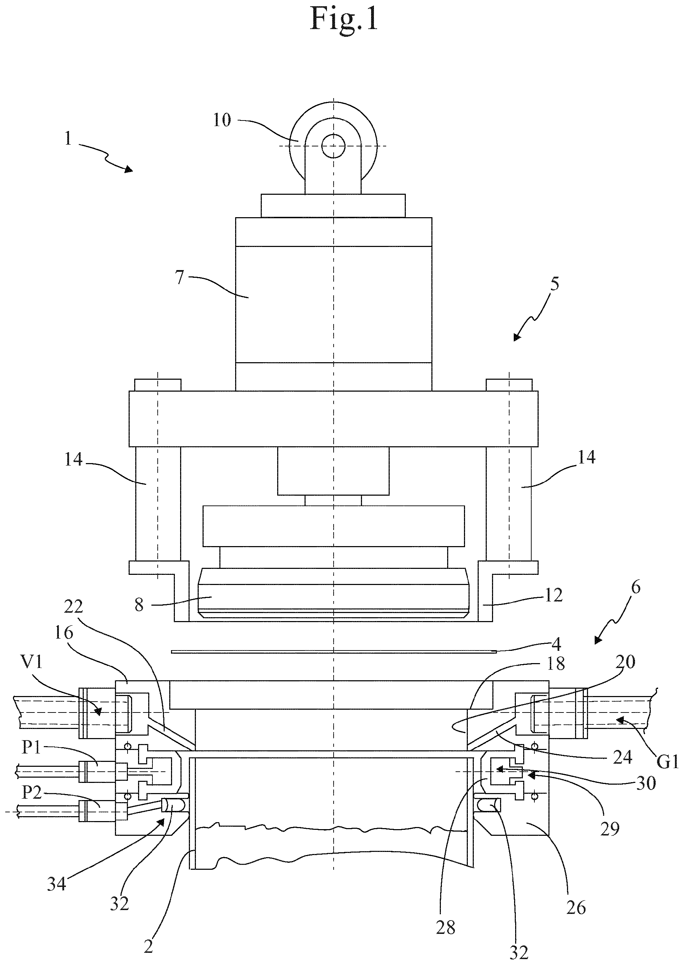

On a représenté à la figure 1 un outil de scellage 1 utilisé dans une installation pour la fabrication d'un emballage en carton comprenant un corps de boîte 2 et un fond 4. Cet outil de scellage 1 permet l'assemblage du fond 4, préalablement introduit dans l'outil de scellage 1 sous forme d'un aplat, au corps de boîte 2, représenté sur les figures comme étant de forme de révolution à section transversale carrée. On notera toutefois que bien entendu, l'outil de scellage 1 peut être adapté à tous types d'emballages de forme de révolution, comme des emballages à section transversale circulaire, ovale, triangulaire, oblongue... etc.

Le corps de boîte 2 est ici composé de trois couches de assemblées entre elles à l'aide d'une colle en dispersion dans l'eau :
- un liner en contact avec le produit constitué de papier, d'un film barrière l'oxygène et à la vapeur d'eau, par exemple à base de polytéréphtalate d'éthylène et d'un film de scellage réactivable, par exemple à base de polyéthylène basse densité ou haute densité Un tel emballage est par exemple décrit dans le document EP 2 623 306 ;
- une à trois couches de carton à base de fibres vierges ou recyclées pour conférer sa résistance au corps de boîte ; et
- une étiquette principalement composée de fibres vierges et imprimée de préférence avec des encres et du vernis à l'eau afin d'éviter toute transmission d'huile minérale dans le produit alimentaire.

L'outil de scellage 1 comprend un dispositif d'introduction 5 du fond 4 dans un dispositif de scellage 6.

Le dispositif d'introduction 5 comprend un actionneur 7 permettant d'introduire un tampon de scellage 8 dans une matrice 16 dans laquelle est placée le corps de boîte 2 contenant le produit (non représenté pour des raisons de clarté). L'actionneur 7, relié à une première extrémité au tampon de scellage 8, est relié à son extrémité opposé à un galet de poussée 10 actionné par une came mécanique, un servomoteur un vérin (non représentés) permettant de le faire descendre le tampon de scellage 8 dans la matrice 16 après que le fond 4 a été introduit en regard du tampon de scellage 8 et de la matrice 16.

Le dispositif d'introduction 5 comprend également un serre-flanc 12 ayant pour fonction de contraindre les flancs du fond 4 pour éviter la formation de plis dans le matériau et ainsi assurer l'étanchéité du fond 4, dont l'action est combinée à des ressorts 14 de sorte à maintenir le fond 4 sous contrainte.

Le tampon de scellage 8 est ici de forme générale de révolution à section polygonale, afin de conférer au fond 4 une forme adaptée à celle du corps de boîte 2. Au cours du procédé de scellage, il est chauffé par conduction, haute fréquence, impulsion ou ultrasons. Les moyens de chauffage du tampon de scellage 8 ne sont ici par représentés pour des raisons de clarté.

Le dispositif de scellage 6 comprend une matrice de formage 16, par exemple en acier traité, destinée à recevoir le fond 4 à plat préalablement découpé. Cette matrice 16 comprend une empreinte de centrage 18, de forme générale de cuvette dont la circonférence correspond à celle du fond 4 prédécoupé, sur laquelle le fond 4 sera centré par emboutissage sous l'effet de la descente du tampon de scellage 8 mû par l'actionneur 7. La matrice 16 comprend en outre un alésage de formage 20, situé dans le prolongement de l'empreinte de centrage 18, de dimensions inférieures à celles de l'empreinte de centrage 18, de sorte à conférer sa forme finale de cuvette au fond 4 par emboutissage via le tampon de scellage 8.

La matrice 16 comprend de plus un canal de mise sous vide 22 reliant son enceinte à une conduite de mise sous vide V1, permettant d'effectuer le vide dans la matrice 16. La matrice 16 comprend également un canal de gazage 24 disposé de manière opposée au canal de mise sous vide 22. Le canal de gazage 24 relie l'enceinte de la matrice 16 à une conduite de gazage G1 qui permet de l'alimenter en gaz. Le canal de gazage 24 et la conduite de gazage G1 sont notamment utilisés dans le cadre de la fabrication d'emballages devant être remplis de gaz neutre pour augmenter la durée de conservation des produits alimentaires qu'ils sont destinés à contenir.

Le dispositif de scellage 8 comprend également une contre-matrice 26 (ici de forme générale polygonale compte tenu de la forme du corps de boîte 2), réalisée par exemple en acier traité, disposée sous la matrice 16. Elle est adaptée aux formes et dimensions du corps de boîte 2 qu'elle accueille. Ainsi, dans le cas présent, elle est de forme générale de révolution à section sensiblement carrée.

La contre-matrice 26 est munie d'un élément d'appui extensible (ou profil extensible)28 de forme générale polygonale (ou ronde) installé dans un logement 29 ménagé sur toute la circonférence de la contre-matrice 26. Le corps de boîte 4 est disposé dans la contre-matrice 26 de sorte à se trouver en regard de l'élément d'appui extensible 28. De manière à ce qu'il puisse être gonflé, les parois de l'élément d'appui extensible 28 délimitent une cavité de gonflage 30 qui est placée en regard d'un conduit de gonflage P1 permettant de l'alimenter en air comprimé. De préférence, mais de façon optionnelle, la contre-matrice 26 comprend également un joint d'étanchéité 32 disposé dans un logement 34 ménagé dans la circonférence de la contre-matrice 26. Ce joint d'étanchéité 32, qui est par exemple un joint semi-torique réalisé en élastomère, peut lui aussi être gonflé via un conduit de gonflage supplémentaire P2.

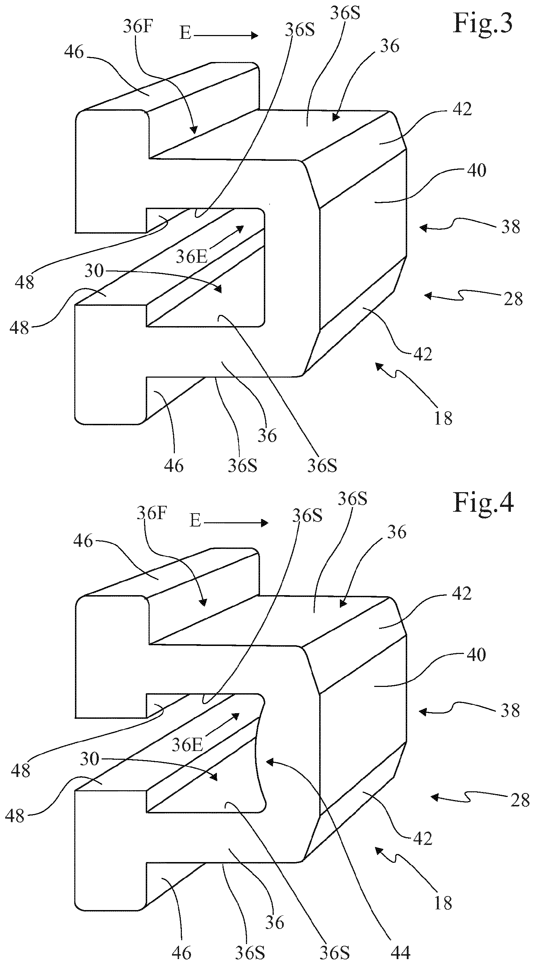

On va maintenant décrire en détail l'élément d'appui extensible 28 en référence à la figure 3 qui en illustre une portion à l'état de repos. L'élément d'appui extensible 28 comprend un profil en coupe transversale comprenant deux sections d'extension 36, ou sections horizontales, de forme générale allongée parallèles s'étendant selon une direction d'extension illustrée par la flèche E.

Les sections d'extension 36 sont chacune reliée, à une de leurs extrémités 36E, à une section d'appui 38, de sorte que les sections d'extension 36 et la section d'appui 38 définissent entre elles une cavité de gonflage 30 de l'élément d'appui extensible 28. Une fois l'élément d'appui extensible 28 placé dans son logement 29 dans la contre-matrice 26, la cavité de gonflage 30 se trouve en regard du conduit de gonflage P1. La réunion des sections d'extension 36 et de la section d'appui 38 donne au profil de l'élément d'appui extensible 28 une forme générale de U.

Les sections d'extension 36 sont configurées de sorte à s'allonger selon la direction d'extension E lors du gonflage de l'élément d'appui extensible 28. Le gonflage de l'élément d'appui extensible 28 se fait, comme on le verra plus loin, par introduction d'air à une pression prédéterminée dans la cavité de gonflage 30. Une fois l'élément d'appui extensible 28 placé dans son logement 29 dans la contre-matrice 26, l'extension des sections d'extension 36 se fait dans le sens depuis le logement 29 vers le corps de boîte 2. Les sections d'extension 36 sont de préférence délimitées par deux surfaces extérieures 36S planes. Dans l'exemple représenté sur les figures, elles sont de forme sensiblement parallélépipédique.

La section d'appui 38 comprend une surface d'appui 40 libre sensiblement plane, configurée pour venir en contact avec le corps d'emballage 2. La surface d'appui 40 s'étend selon un plan sensiblement normal à la direction d'extension. De cette façon, la poudre de produit alimentaire a non seulement peu de chances de s'y déposer, mais si elle s'y dépose, elle ne restera pas en contact avec la surface d'appui 40 lors du dégonflage suivi d'un regonflage de l'élément d'appui extensible.

La section d'appui 38 comprend en outre, aux jonctions avec les sections d'extension, des portions de dégagement 42 en biseau. Plus particulièrement, les portions de dégagement en biseau 42 forment un chanfrein entre les sections d'extension 36 et la surface d'appui 40, par exemple réalisant un angle compris entre 20° et 40°, de préférence 30° avec les sections d'extension 36.

Dans un deuxième mode de réalisation de l'élément d'appui extensible 28 illustré à la figure 4, afin d'augmenter la surface de la section d'appui 38 et donc les efforts transmis par l'élément d'appui extensible 28 sur le corps de boîte 2, la section d'appui 38 comprend une portion de renforcement 44 de forme concave s'étendant dans le sens opposé à la surface d'appui 40. La portion de renforcement 44 s'étend par exemple d'une section d'extension 36 à l'autre, sur une portion de la circonférence de l'élément d'appui extensible 28 ou sur toute sa circonférence. La portion de renforcement 44 a ici une section transversale sensiblement en arc de cercle. D'autres formes peuvent toutefois être envisagées comme on le verra plus loin.

L'élément d'appui extensible 28 comprend en outre des lèvres de maintien extérieur 46 s'étendant, à partir des extrémités 36F des sections d'extension opposées à la section d'appui 38, selon une direction sensiblement normale à la direction d'extension. Les lèvres de maintien extérieur 46 s'étendent respectivement vers l'extérieur de l'élément d'appui extensible 28, autrement dit en s'écartant de la cavité de gonflage 30. Les lèvres de maintien extérieur 46 sont logées dans des renfoncements prévus à cet effet du logement 29 de l'élément d'appui extensible 28.

De préférence, afin d'augmenter l'étanchéité assurée par l'élément d'appui extensible 28 lors des phases de mise sous vide, de mise sous basse pression et de mise sous haute pression de la cavité de gonflage 30 qui seront décrites plus loin, l'élément d'appui extensible 28 comprend, en sus des lèvres de maintien extérieur 46, des lèvres de maintien intérieur 48. Les lèvres de maintien intérieur 48 s'étendent, à partir des extrémités des sections d'extension 36E opposées à la section d'appui 38, selon une direction sensiblement normale à la direction d'extension. Les lèvres de maintien intérieur 48 s'étendent respectivement vers l'extérieur de l'élément d'appui extensible 28, autrement dit en s'approchant de la cavité de gonflage 30. Les lèvres de maintien intérieur 48 sont logées dans des renfoncements prévus à cet effet du logement 29 de l'élément d'appui extensible 28.

La présence des lèvres de maintien extérieur 46 et des lèvres de maintien intérieur 48, donne ainsi au profil de l'élément d'appui extensible 28 une forme générale de fer à cheval.

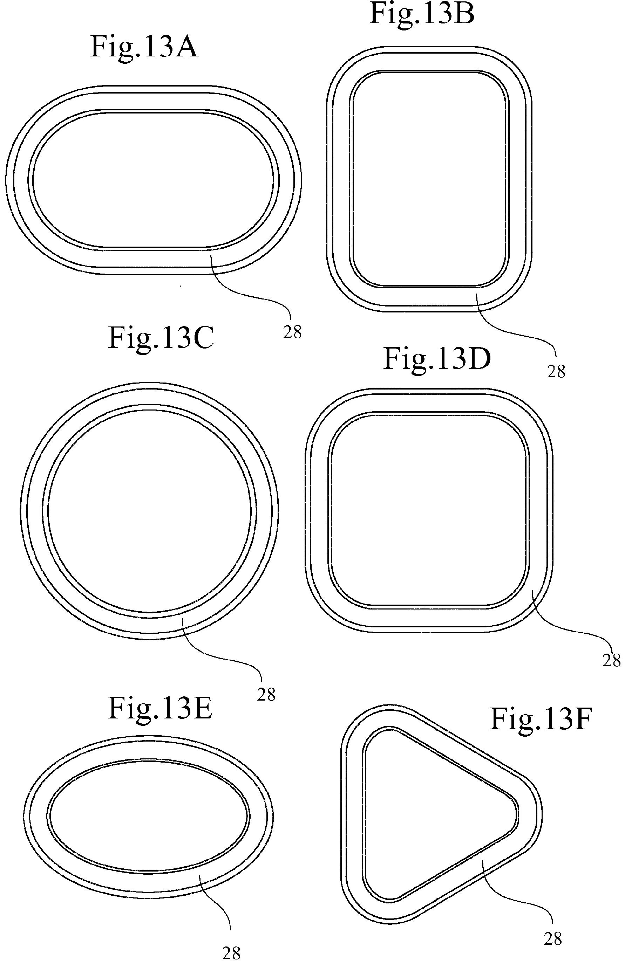

L'élément d'appui extensible 28 est réalisé en élastomère, par exemple en caoutchouc dont la densité et la dureté sont adaptées aux efforts à transmettre et dont l'élasticité permet une extension de l'ordre de 2 à 5 mm. En outre, le matériau est choisi de sorte à pouvoir résister à des températures allant jusqu'à 250°C. Dans l'exemple représenté sur les figures, l'élément d'appui extensible 28 sera de forme générale carrée compte tenu de la forme du corps de boîte 2. Toutefois, l'élément d'appui extensible 28, tout en restant de forme générale polygonale, pourra avoir des formes, par exemple triangulaire, oblongue, ovale, rectangulaire, ronde, etc. Des exemples de variantes de forme de l'élément d'appui extensible 28 sont illustrées aux figures 13A à 13F.

On va maintenant décrire un procédé de scellage d'un fond 4 sur un corps de boîte 2 à l'aide de l'outil de scellage 1 en référence aux figures 1, 2 et 5 à 8.

L'état de repos de l'outil de scellage 1 est représenté à la figure 1. Le fond 4 a été préalablement introduit entre le tampon de scellage 8 et la matrice 16.

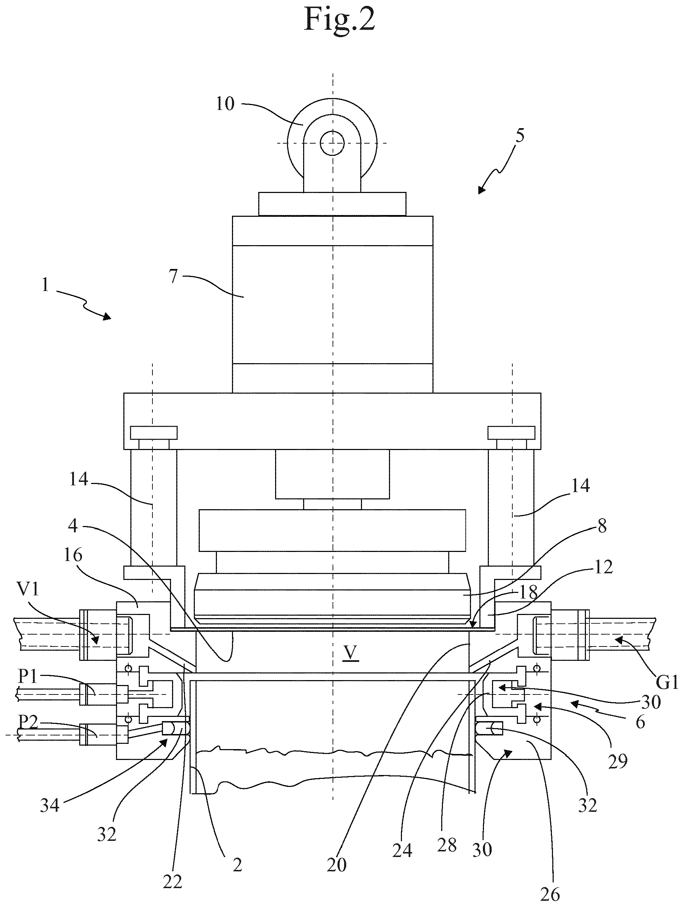

Dans une étape de mise sous vide de l'emballage illustrée à la figure 2, le galet de poussée 10 est actionné de sorte que l'actionneur 7 fasse descendre simultanément à la fois le tampon de scellage 8 contre la partie centrale du fond 4 et le serre-flanc 12 contre les flancs (la périphérie) du fond 4. Le fond 4 est ainsi plaqué contre l'empreinte de centrage 18 et maintenu fortement sous pression par l'action combinée du serre-flanc 12 et des ressorts 14. Simultanément ou peu après, de manière optionnelle, le joint d'étanchéité 32 est gonflé par introduction d'air dans son conduit de gonflable P2 de sorte à assurer une bonne étanchéité du volume V délimité par le fond 4, la matrice de formage 16, la contre-matrice 26, le corps de boîte 2 et le produit contenu dans le corps de boîte 2. En revanche, l'élément d'appui extensible 28 est maintenu au repos.

De façon optionnelle, on procède, avant une étape de mise sous vide du volume V décrite plus loin (en particulier après d'introduction du fond 4 ou du couvercle 50 dans la matrice 16, et avant l'étape de gonflage de l'élément d'appui extensible 28 qui sera décrite plus bas), à un pré-gonflage de l'élément d'appui extensible 28 pour provoquer l'extension des sections d'extension 26 de sorte que l'extension des sections d'extension 26 provoque la mise en contact de la surface d'appui 40 contre le corps de boîte 2.

Le pré-gonflage de l'élément d'appui extensible 28 est effectué par introduction d'air à une pression prédéterminée de pré-gonflage (inférieure à la pression de gonflage évoquée plus bas) via le conduit de gonflage P1, de sorte à ce qu'il s'engouffre dans la cavité de gonflage 30 et gonfle l'élément d'appui extensible 28. La pression de pré-gonflage P_{B1}, ou basse pression de gonflage, est par exemple comprise entre 0,5 à 1,5 bar.

L'étape de pré-gonflage permet à l'élément d'appui extensible 28 d'exercer une fonction secondaire d'étanchéité du volume V, à la manière du joint d'étanchéité 32, en complément ou en remplacement du joint d'étanchéité 32. Ainsi, dans le cas ou les contraintes d'étanchéité sont moindres (par exemple pour certains produits tels que la farine), on pourra se passer du joint d'étanchéité 32, la fonction d'étanchéité du volume V étant réalisée par l'élément d'appui extensible 28 à l'état pré-gonflé. A l'inverse, dans le cas où les contraintes d'étanchéités sont importantes, par exemple pour les produits dont l'emballage doit recevoir un gaz neutre de sorte à augmenter la durée de conservation des produits alimentaires qui s'y trouvent (produits gras tels que des noix, aliments pour bébés...etc.) on pourra compléter l'action du joint d'étanchéité 32 par celle du pré-gonflage de l'élément d'appui extensible 28. Enfin, dans certains cas, la présence du joint d'étanchéité 32 peut permettre de se passer de l'étape de pré-gonflage.

Le vide est ensuite réalisé dans le volume V par aspiration de l'air y étant contenu via le canal de mise sous vide 22 et la conduit de mise sous vide V1. De préférence, cette action est réalisée de sorte à obtenir une dépression comprise entre -50 et -300 millibars dans le volume V.

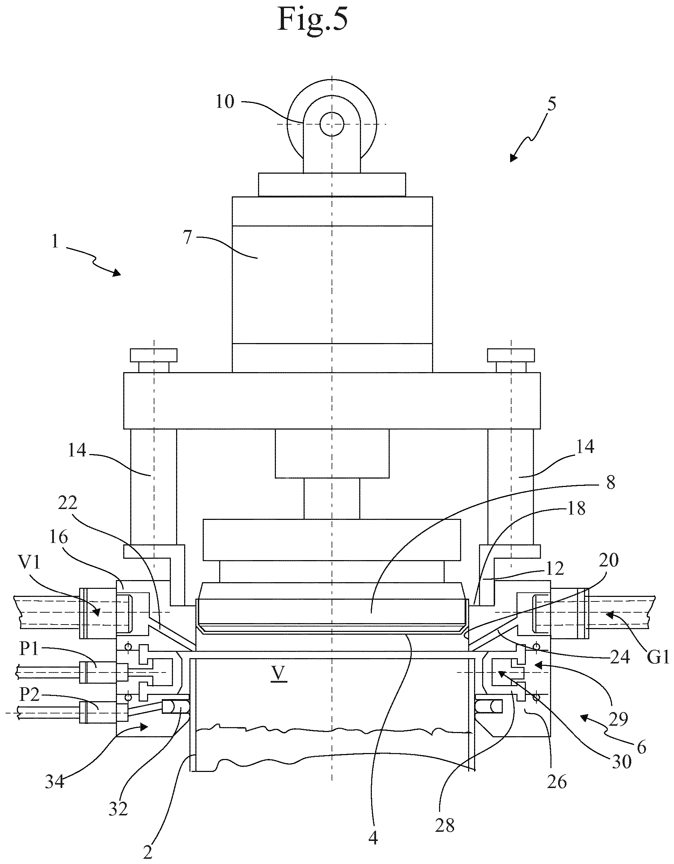

Dans une étape de formage du fond 4 illustrée à la figure 5, l'actionneur 7 déplace le tampon de scellage 8 vers la matrice 16 de sorte à former le fond 4 en forme de cuvette, du fait de la réduction de section de passage entre l'empreinte de centrage 18 et l'alésage de formage 20. Le fond 4 est maintenu sous pression par le serre-flanc 12 dont l'action est combinée à celles des ressorts 14.

Dans le cadre de boîtes devant recevoir un gaz neutre de sorte à augmenter la durée de conservation des produits alimentaires qui s'y trouvent, une étape de gazage est réalisée après l'étape de mise sous vide, de préférence en parallèle du formage du fond. Un gaz neutre tel que de l'azote est introduit dans la matrice 16 via le canal de gazage 24 et la conduite de gazage G1. Cette étape de gazage est naturellement optionnelle si l'introduction de gaz dans l'emballage n'est pas nécessaire du fait de la nature des produits à conserver.

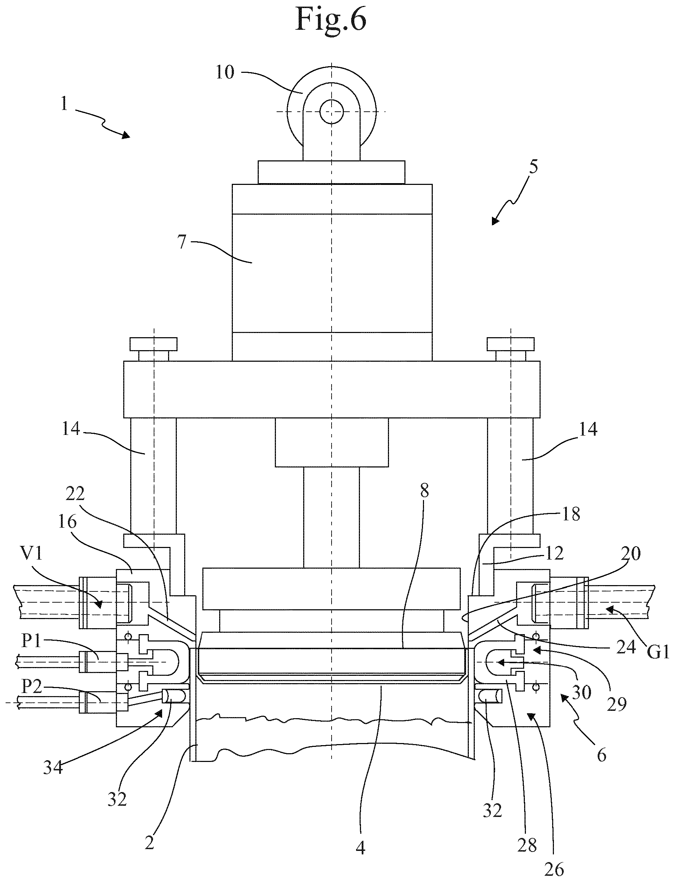

Dans une étape de pose et scellage du fond illustrée à la figure 6, l'actionneur 7 déplace le tampon de scellage 8 de sorte à placer le fond 4 dans le corps de boîte 2 maintenu sous vide. Le contact du tampon de scellage 8, préchauffé à une température prédéfinie, avec le fond 4, provoque la fusion du matériau réactivable permettant la liaison entre les parois du fond 4 et du corps 2.

En parallèle, de l'air à une pression prédéterminée de gonflage, ou haute pression de gonflage, P_{H} est envoyé via le conduit de gonflage P1 de sorte à ce qu'il s'engouffre dans la cavité de gonflage 30 et gonfle l'élément d'appui extensible 28. La haute pression de gonflage P_{H} est par exemple comprise entre 4 et 16 bars. Lors de ce gonflage, les sections d'extension 36 s'allongent (s'étirent) du fait de leur élasticité. La surface d'appui 40 vient alors en contact avec la paroi du corps de boîte 2 se trouvant en regard de l'élément d'appui extensible 28 de sorte à y exercer un effort important et uniforme grâce à sa forme qui assure une bonne transmission des efforts uniformément répartie. La zone de scellage se trouvant à la fois en regard du tampon de scellage 8 et de l'élément d'appui extensible 28 est donc serrée entre ces deux éléments. En revanche, grâce aux portions de dégagement 42, aucun effort n'est exercé sur les parties du corps 2 de boîte n'étant pas en contact avec le tampon de scellage 8. De ce fait, les boîtes ne sont pas déformées et l'élément d'appui extensible 28 s'abîme nettement moins rapidement qu'un joint torique gonflable. L'élément d'appui extensible 28 pourra par exemple exercer sur le corps de boîte 2 une pression d'air réglable comprise entre 4 et 16 bars. Dans une variante, le gonflage de l'élément d'appui extensible 28 pourra être réalisé par introduction dans la cavité gonflable 30 d'un fluide sous pression, de préférence un fluide caloporteur tel que du glycol par exemple. Bien entendu, d'autres fluides caloporteurs peuvent être envisagés. Dans ce cas, la pression exercée sur le corps de boîte 2 (haute pression de gonflage P_{H}) pourra être comprise entre 16 et 36 bars.

Les opérations de mise en température des matériaux par le tampon de scellage 8 et le maintien par l'élément d'appui extensible 28 sont effectuées pour une durée dépendant de la nature des parois de l'emballage. Elle peut par exemple être comprise entre 0.2 et 3 secondes selon le type d'outil de scellage utilisé. Durant ces opérations, le joint d'étanchéité 32 est relâché pour retrouver sa position de repos.

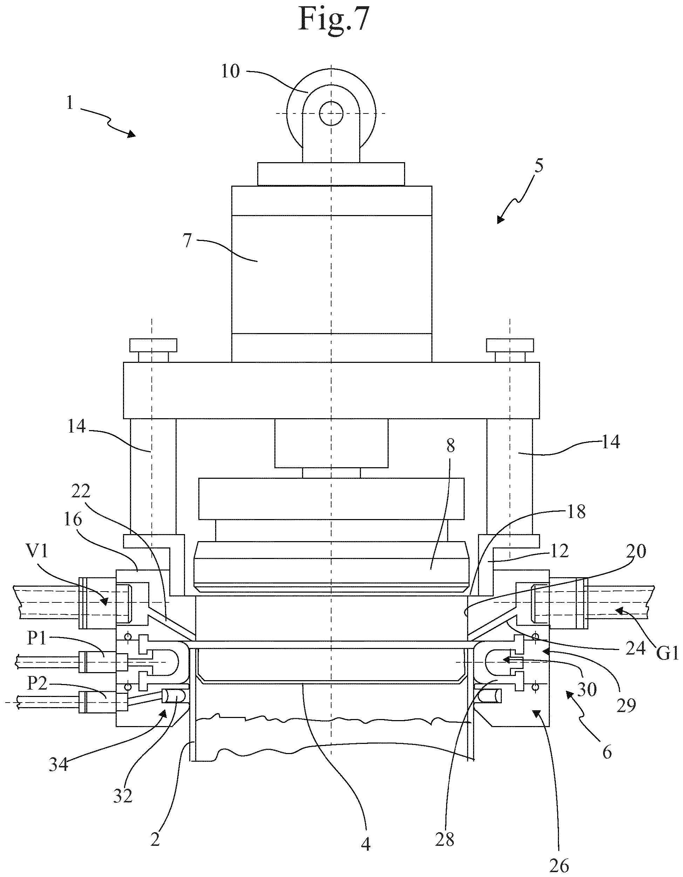

Durant une étape de refroidissement illustrée à la figure 7, le joint d'étanchéité 32 est mis sous vide par l'intermédiaire du conduit P2. Une partie de la pression exercée sur l'élément d'appui extensible 28 par l'introduction d'air du conduit P1 est relâchée (passage de la pression haute P_{H} à une plus basse pression P_{B2}) de sorte à le relâcher mais à ce qu'il maintienne le corps de boîte 2 en contact ferme avec le fond 4 pour éviter un descellement entre le fond 4 et le corps de boîte 2. Le tampon de scellage 8 est alors retiré de la matrice 16 par l'intermédiaire de l'actionneur 7. Le fond 4 de la boîte est en parallèle refroidi par soufflage (les moyens de soufflage ne sont pas représentés pour des raisons de clarté) dans la zone scellée avec le corps de boîte 2.

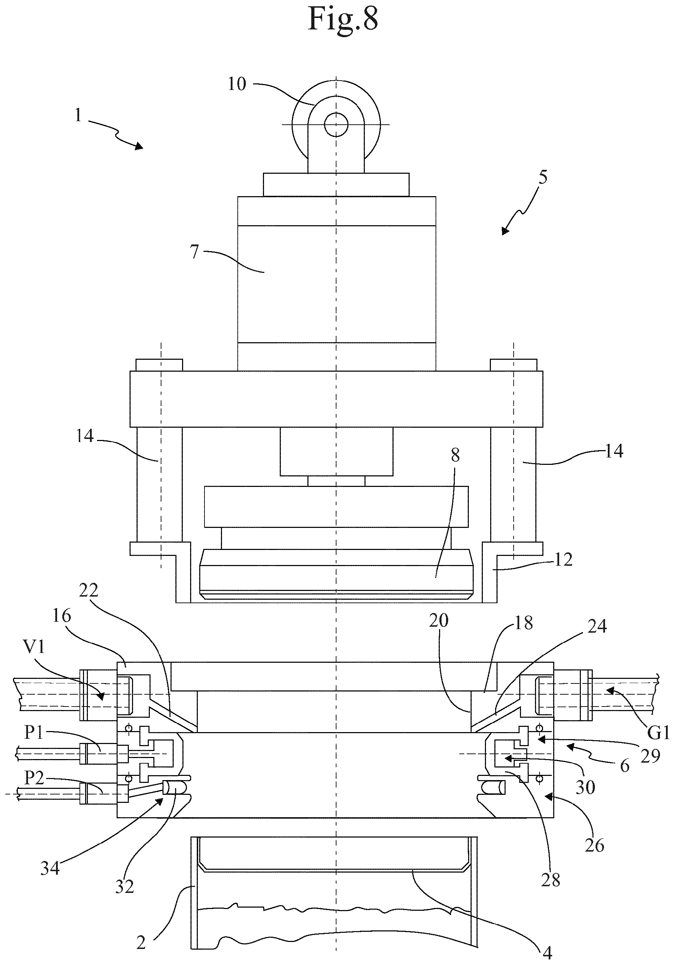

Dans une étape d'extraction illustrée à la figure 8, l'élément d'appui extensible 28 est mis sous vide par l'intermédiaire du conduit P1 de sorte à ce qu'il puisse se replacer dans son logement 34 au repos pour une nouvelle utilisation. Au cours de cette opération, les éventuelles particules de produit alimentaire ayant pu se déposer sur la surface d'appui 40 s'en détachent de sorte que l'élément d'appui extensible 28, la matrice 16 et la contre-matrice 26 restent propres. Par la suite, une fois l'élément d'appui extensible 28 rentré dans son logement 34, l'assemblage de corps de boîte 2 et de fond 4 est extrait de la matrice 16 sans qu'il ne rentre en contact et use l'élément d'appui extensible 28 par frottement. Le dispositif d'introduction 5 reprend alors sa position d'origine illustrée à la figure 1 pour pouvoir effectuer une nouvelle séquence du procédé de scellage.

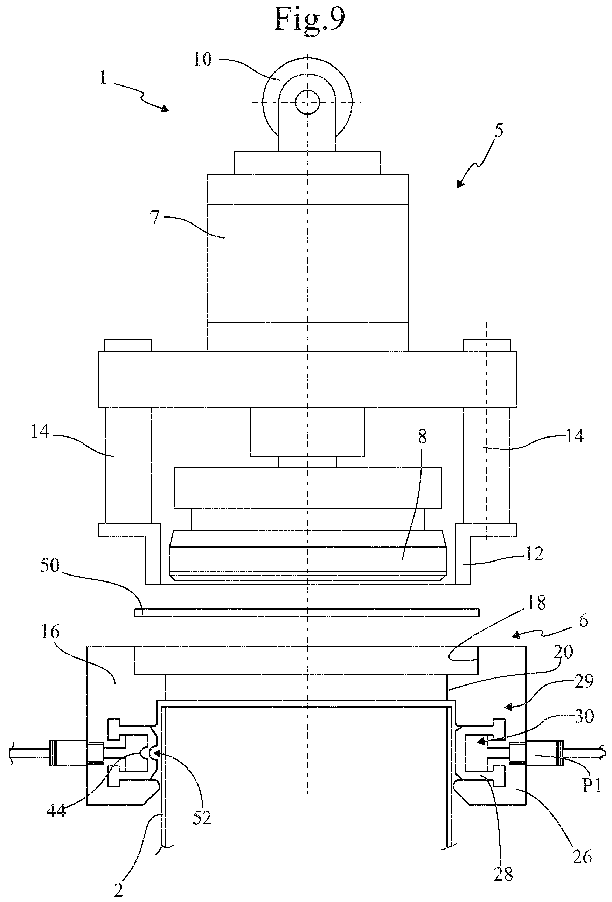

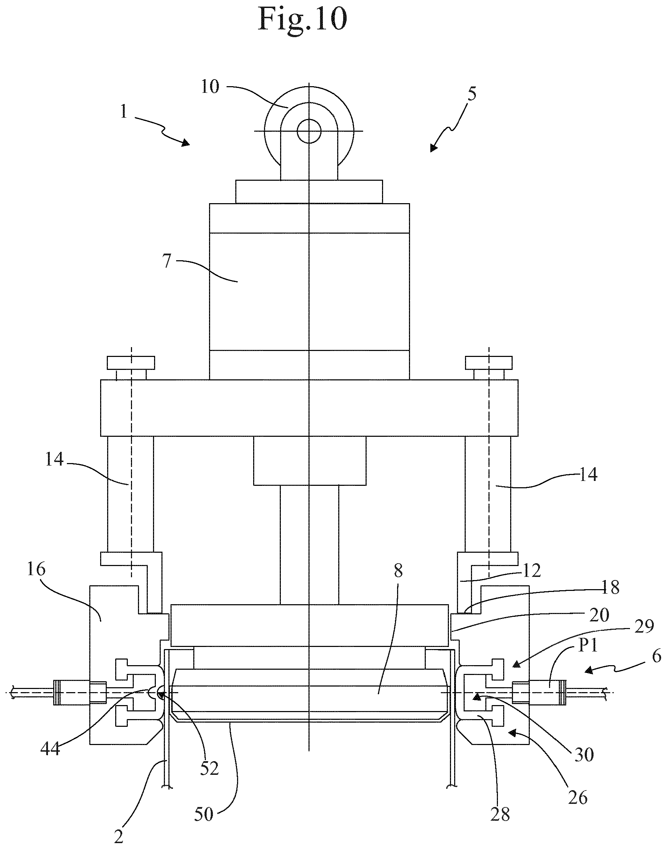

On va maintenant décrire un outil de scellage 1 selon un deuxième mode de réalisation permettant de sceller un couvercle 50 à un corps de boîte 2 en référence aux figures 9 et 10. L'outil de scellage 1 de couvercle ne diffère de celui de l'outil de scellage de fond 1 que par son élément d'appui extensible 28, et par le fait que les canaux et conduits de mise sous vide et de gazage ne sont pas nécessaires (et donc non représentés sur les figures 9 et 10).

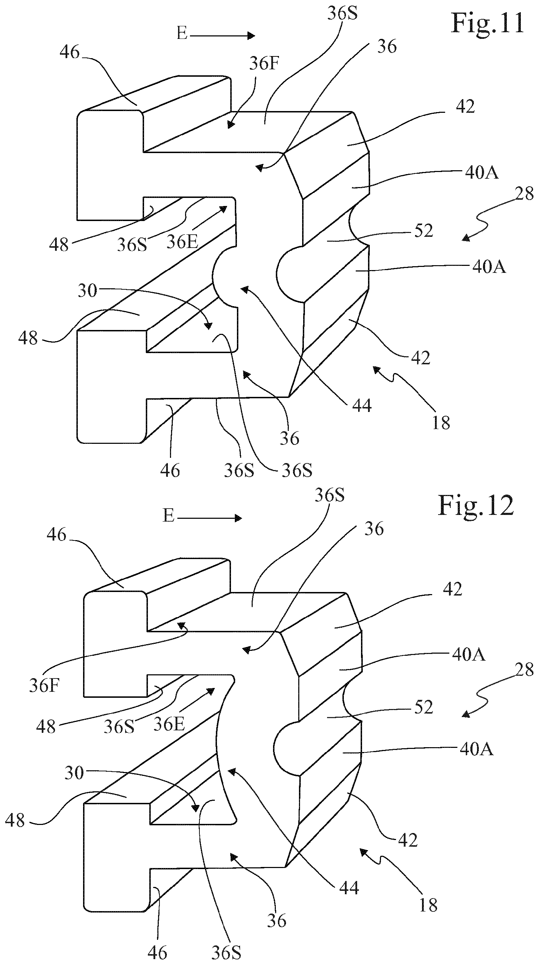

Comme on peut le voir aux figures 11 et 12, représentant des troisième et quatrième modes de réalisation de l'élément d'appui extensible 28, un élément d'appui extensible 28 utilisé pour le scellage de couvercles comprend une gorge 52 pratiquée dans la surface d'appui 40 sur une portion déterminée de la circonférence de l'élément d'appui extensible 28. La gorge 52 est pratiquée dans une zone centrale de la surface d'appui 40. Dans les exemples représentés sur les figures 11 et 12, la surface d'appui se trouve ainsi divisée en deux demi-surfaces d'appui 40A situées de part et d'autre de la gorge 52. La gorge 52 est par exemple de section semi-circulaire, mais d'autres formes peuvent naturellement être envisagées.

Dans le troisième mode de réalisation de l'élément d'appui extensible 28 illustré à la figure 11, la section d'appui 38 comprend une portion de renforcement 44 de forme complémentaire à la gorge 52 s'étendant dans le sens opposé à la surface d'appui 40.

Dans le quatrième mode de réalisation de l'élément d'appui extensible 28 illustré à la figure 12, la section d'appui 38 comprend une portion de renforcement 44 identique à celle du deuxième mode de réalisation de l'élément d'appui extensible 28 illustré à la figure 4, autrement dit de forme concave reliant les deux sections d'extension 36 avec un profil en arc de cercle.

La présence de la gorge 52 permet de définir un dégagement partiel du profil de l'élément d'appui extensible 28 de sorte à créer une faiblesse de scellage au niveau d'une languette d'ouverture facile d'une membrane du couvercle 50. Comme on peut le voir à la figure 10 illustrant l'élément d'appui extensible 28 en position active, du fait de la présence de la gorge 52, la zone F du couvercle 50 se trouvant en regard de cette gorge 52 ne sera pas mise sous contrainte de la même façon que le reste de la circonférence du corps de boîte 2. De ce fait, cette zone F du couvercle 50 sera scellée de façon moins ferme au corps de la boîte 2.

Le procédé de scellage d'un couvercle 52 sur un corps de boîte 2 est analogue à celui de scellage d'un fond 4 sur un corps de boîte, dans lequel les étapes de mise sous vide et de gazage ne sont pas effectuées.

Naturellement, les exemples représentés sur les figures et discutés ci-dessus ne sont donnés qu'à titre illustratif et non limitatif. Diverses variantes sont envisageables. Il est explicitement prévu que les différents modes de réalisation présentés puissent être combinés. Il est souligné que toutes les caractéristiques, telles qu'elles se dégagent pour un homme du métier à partir de la présente description, des dessins et des revendications attachées, peuvent être combinées à d'autres caractéristiques ou groupes de caractéristiques divulguées ici, pour autant que cela n'a pas été expressément exclu ou que des circonstances techniques l'en empêchent.

### NOMENCLATURE

- 1 :: outil de scellage
- 2 :: corps de boîte
- 4 :: fond
- 5 :: dispositif d'introduction
- 6 :: dispositif de scellage
- 7 :: actionneur
- 8 :: tampon de scellage
- 10 :: galet de poussée
- 12 :: serre-flanc
- 14 :: ressorts
- 16 :: matrice
- 18 :: empreinte de centrage
- 20 :: alésage de formage
- 22 :: canal de mise sous vide
- V1 :: conduite de mise sous vide
- 24 :: canal de gazage
- G1 :: conduite de gazage
- 26 :: contre-matrice
- 28 :: élément d'appui extensible
- 29 :: logement de l'élément d'appui extensible
- 30 :: cavité de gonflage de l'élément d'appui extensible
- P1 :: conduit de gonflage de l'élément d'appui extensible
- 32 :: joint d'étanchéité
- P2 :: conduit de gonflage du joint d'étanchéité
- 34 :: logement du joint d'étanchéité
- 36 :: sections d'extension de l'élément d'appui extensible
- 36S :: surfaces externes des sections d'extension
- 36E :: extrémité de jonction
- 36F :: extrémité opposée à l'extrémité de jonction
- 38 :: Section d'appui
- 40 :: Surface d'appui
- 40A :: demi-surfaces d'appui
- 42 :: Portions de dégagement
- 44 :: Portion de renforcement
- 46 :: Lèvres de maintien extérieur
- 48 :: Lèvres de maintien intérieur
- 50 :: Couvercle
- 52 :: Gorge

## Revendications

1. Elément d'appui extensible (28) destiné à être disposé dans un outil de scellage d'un fond (4) ou d'un couvercle (50) d'emballage en carton sur un corps (2) dudit emballage par fusion au moyen d'un tampon de scellage (8) d'un matériau réactivable permettant la liaison entre les parois du fond (4) ou du couvercle (50) et du corps (2); l'élément d'appui étant de forme générale polygonale et réalisé de préférence en élastomère et
présentant un profil en coupe transversale comprenant deux sections d'extension (36) de forme générale allongée parallèles s'étendant selon une direction d'extension (E),
les sections d'extension (36) étant chacune reliée, à une de leurs extrémités (36E), à une section d'appui (38), de sorte que les sections d'extension et la section d'appui définissent entre elles une cavité de gonflage (30) de l'élément d'appui extensible (28),
les sections d'extension (36) étant configurées de sorte à s'allonger selon la direction d'extension (E) lors du gonflage de l'élément d'appui extensible (28),
la section d'appui (38) comprenant une surface d'appui (40) libre sensiblement plane, configurée pour venir en contact avec le corps (2) d'emballage, la surface d'appui (40) s'étendant selon un plan sensiblement normal à la direction d'extension (E) en regard du tampon de scellage (8) et
de préférence, la section d'appui (38) comprenant aux jonctions avec les sections d'extension (36), des portions de dégagement (42) en biseau,
ledit élément d'appui extensible (28) comprenant en outre des lèvres de maintien (46, 48) s'étendant, à partir des extrémités des sections d'extension (36F) opposées à la section d'appui (38), selon une direction sensiblement normale à la direction d'extension (E).

2. Elément d'appui extensible (28) selon la revendication 1, caractérisé que l'élément d'appui comprend des lèvres de maintien extérieur (46) s'étendant, à partir des extrémités des sections d'extension (36F) opposées à la section d'appui (36), selon une direction sensiblement normale à la direction d'extension (E) en s'écartant vers l'extérieur de la cavité de gonflage (30).

3. Elément d'appui extensible (28) selon l'une des revendications 1 ou 2, **caractérisé en ce que** l'élément d'appui comprend des lèvres de maintien intérieur (48) s'étendant, à partir des extrémités des sections d'extension (36F) opposées à la section d'appui, selon une direction sensiblement normale à la direction d'extension (E), vers l'intérieur de la cavité de gonflage (30).

4. Elément d'appui extensible (28) selon l'une quelconque des revendications précédentes, dans lequel la section d'appui (38) comprend une portion de renforcement (44) de forme concave s'étendant dans le sens opposé à la surface d'appui (40), la portion de renforcement (44) s'étendant par exemple d'une section d'extension (36) à l'autre.

5. Elément d'appui extensible (28) selon l'une quelconque des revendications précédentes, dans lequel une gorge (52) est pratiquée dans la surface d'appui (40) sur une portion déterminée de la circonférence de l'élément d'appui extensible (28), la gorge (52) étant par exemple de section semi-circulaire.

6. Elément d'appui extensible (28) selon la revendication 5, dans lequel lequel la section d'appui (38) comprend une portion de renforcement (44) de forme complémentaire à la gorge (52) s'étendant dans le sens opposé à la surface d'appui (40).

7. Elément d'appui extensible (28) selon l'une quelconque des revendications précédentes, dans lequel les portions de dégagement (42) en biseau forment un chanfrein entre les sections d'extension et la surface d'appui (40), par exemple réalisant un angle compris entre 20° et 40°, de préférence 30° avec les sections d'extension (36).

8. Dispositif de scellage (6) d'un couvercle ou d'un fond d'un emballage sur un corps d'emballage en carton par fusion d'un matériau réactivable au moyen d'un tampon de scellage (8) permettant la liaison entre les parois du fond (4) ou du couvercle (50) et du corps (2) comprenant :
- un élément d'appui extensible (28) de forme générale polygonale et réalisé en élastomère,
- une matrice de formage (16) d'un fond (4) ou d'un couvercle (50), destinée à recevoir un fond (4) ou un couvercle (50) embouti par le tampon de scellage (8) ;
- une contre-matrice (26), destinée à recevoir un corps (2) d'emballage, comprenant un logement (29) accueillant l'élément d'appui extensible (28) se trouvant en regard d'une zone à sceller du corps (2) de l'emballage et en regard du tampon de scellage (8) ; et
- des moyens de gonflage (P1) de l'élément d'appui extensible (28) par l'intermédiaire de la cavité de gonflage (30) configurés pour provoquer l'extension des sections d'extension (36), de sorte que l'extension des sections d'extension (26) provoque la mise en contact de la surface d'appui (40) contre le corps de boîte (2),
**caractérisé en ce que** l'élément d'appui extensible (28) présente un profil en coupe transversale comprenant deux sections d'extension (36) de forme générale allongée parallèles s'étendant selon une direction d'extension (E),
les sections d'extension (36) étant chacune reliée, à une de leurs extrémités (36E), à une section d'appui (38), de sorte que les sections d'extension et la section d'appui définissent entre elles une cavité de gonflage (30) de l'élément d'appui extensible (28),
les sections d'extension (36) étant configurées de sorte à s'allonger selon la direction d'extension (E) lors du gonflage de l'élément d'appui extensible (28), la section d'appui (38) comprenant une surface d'appui (40) libre sensiblement plane, configurée pour venir en contact avec le corps (2) d'emballage, la surface d'appui (40) s'étendant selon un plan sensiblement normal à la direction d'extension (E) et, de préférence, la section d'appui (38) comprenant aux jonctions avec les sections d'extension (36), des portions de dégagement (42) en biseau, ledit élément d'appui extensible (28) comprenant en outre des lèvres de maintien (46,48) s'étendant, à partir des extrémités des sections d'extension (36F) opposées à la section d'appui (38), selon une direction sensiblement normale à la direction d'extension (E).

9. Dispositif de scellage (6) d'un fond (4) d'un emballage sur un corps (2) d'emballage selon la revendication 8, comprenant des moyens de mise sous vide (V1, 22) d'un volume (V) compris entre le corps (2) d'emballage, un produit contenu dans le corps (2) et le fond (4), une fois le corps (2) inséré dans la contre-matrice (26) et le fond (4) inséré dans la matrice (16).

10. Procédé de scellage d'un couvercle ou d'un fond d'un emballage en carton sur un corps d'emballage par fusion d'un matériau au moyen d'un tampon de scellage (8) permettant la liaison entre les parois du fond (4) ou du couvercle (50) et du corps (2) à l'aide d'un dispositif de scellage (6) selon l'une quelconque des revendications 8 ou 9, comprenant les étapes suivantes :
- introduction d'un fond (4) ou d'un couvercle (50) par emboutissage au moyen du tampon de scellage (8) dans une matrice (16) de formage du fond (4) ou du couvercle (50) en regard d'une contre-matrice (26) munie d'un logement (29) dans lequel est placé l'élément d'appui extensible (28) ;
- gonflage de l'élément d'appui extensible (28) par l'intermédiaire de la cavité de gonflage (30) pour provoquer l'extension des sections d'extension (26), de sorte que l'extension des sections d'extension (26) provoque la mise en contact de la surface d'appui (40) contre le corps de boîte (2) en regard du tampon de scellage (8) ;
- scellage du fond ou du couvercle sur le corps d'emballage dans la zone de scellage se trouvant à la fois en regard du tampon de scellage (8) et de l'élément d'appui extensible (28) et
- mise sous vide de l'élément d'appui extensible (28) de sorte à provoquer le retrait de l'élément d'appui extensible (28) dans son logement (34).

11. Procédé de scellage d'un couvercle ou d'un fond d'un emballage sur un corps d'emballage selon la revendication 10, dans lequel le gonflage de l'élément d'appui extensible (28) est effectué par introduction de gaz, par exemple de l'air, ou de fluide caloporteur dans la cavité de gonflage (30) à une pression de gonflage prédéterminée.

12. Procédé de scellage d'un couvercle ou d'un fond d'un emballage sur un corps d'emballage selon la revendication 10 ou 11, dans lequel on procède, après l'étape d'introduction du fond (4) ou du couvercle (50) dans la matrice (16), et avant l'étape de gonflage de l'élément d'appui extensible (28), à un pré-gonflage de l'élément d'appui extensible (28) pour provoquer l'extension des sections d'extension (26), de sorte que l'extension des sections d'extension (26) provoque la mise en contact de la surface d'appui (40) contre le corps de boîte (2), le pré-gonflage de l'élément d'appui extensible (28) étant effectué par introduction de gaz, par exemple de l'air, ou de fluide caloporteur dans la cavité de gonflage (30) à une pression prédéterminée de pré-gonflage inférieure à la pression de gonflage.

13. Procédé de scellage d'un couvercle ou d'un fond d'un emballage sur un corps d'emballage selon la revendication 11, dans lequel on procède, après l'étape de gonflage de l'élément d'appui extensible (28), et avant l'étape de mise sous vide de l'élément d'appui extensible (28), à une étape de dégonflage partiel de l'élément d'appui extensible (28), dans lequel la pression du gaz ou le fluide caloporteur introduit dans la cavité de gonflage (30) est réduite à une valeur prédéterminée inférieure à la pression de gonflage.

## Patentansprüche

1. Erweiterbares Stützelement (28), das zur Anordnung in einem Werkzeug zum Versiegeln eines Bodens (4) oder eines Deckels (50) einer Kartonverpackung auf einem Körper (2) der Verpackung durch Schmelzen mittels eines Versiegelungsstempels (8) eines reaktivierbaren Materials bestimmt ist, wodurch die Verbindung zwischen den Wänden des Bodens (4) oder des Deckels (50) und des Körpers (2) erlaubt wird; wobei das Stützelement eine allgemein polygonale Form hat und vorzugsweise aus Elastomer hergestellt ist und
im Querschnitt ein Profil aufweist, das zwei allgemein längliche parallele Erweiterungsabschnitte (36) umfasst, die sich gemäß einer Erweiterungsrichtung (E) erstrecken,
die Erweiterungsabschnitte (36) jeweils an einem ihrer Enden (36E) mit einem Stützabschnitt (38) derart verbunden sind, dass die Erweiterungsabschnitte und der Stützabschnitt zwischen sich einen Aufblashohlraum (30) des erweiterbaren Stützelements (28) definieren,
die Erweiterungsabschnitte (36) derart ausgelegt sind, dass sie sich beim Aufblasen des erweiterbaren Stützelements (28) gemäß der Erweiterungsrichtung (E) verlängern,
der Stützabschnitt (38) eine freie, im Wesentlichen ebene Stützfläche (40) umfasst, die ausgelegt ist, um mit dem Verpackungskörper (2) in Kontakt zu kommen, wobei sich die Stützfläche (40) gegenüber dem Versiegelungsstempel (8) entlang einer zu der Erweiterungsrichtung (E) im Wesentlichen senkrechten Ebene erstreckt und
der Stützabschnitt (38) vorzugsweise an den Verbindungen mit den Erweiterungsabschnitten (36) abgeschrägte Ausnehmungsbereiche (42) umfasst,
wobei das erweiterbare Stützelement (28) ferner Haltelippen (46, 48) umfasst, die sich von den Enden der Erweiterungsabschnitte (36F) gegenüber dem Stützabschnitt (38) entlang einer zu der Erweiterungsrichtung (E) im Wesentlichen senkrechten Richtung erstrecken.

2. Erweiterbares Stützelement (28) nach Anspruch 1, **dadurch gekennzeichnet, dass** das Stützelement äußere Haltelippen (46) umfasst, die sich von den Enden der Erweiterungsabschnitte (36F) gegenüber dem Stützabschnitt (36) entlang einer zu der Erweiterungsrichtung (E) im Wesentlichen senkrechten Richtung erstrecken, wobei sie sich nach außerhalb des Aufblashohlraums (30) spreizen.

3. Erweiterbares Stützelement (28) nach einem der Ansprüche 1 oder 2, **dadurch gekennzeichnet, dass** das Stützelement innere Haltelippen (48) umfasst, die sich von den Enden der Erweiterungsabschnitte (36F) gegenüber dem Stützabschnitt entlang einer zu der Erweiterungsrichtung (E) im Wesentlichen senkrechten Richtung nach innerhalb des Aufblashohlraums (30) erstrecken.

4. Erweiterbares Stützelement (28) nach einem der vorangehenden Ansprüche, wobei der Stützabschnitt (38) einen konkaven Verstärkungsbereich (44) umfasst, der sich in zur Stützfläche (40) entgegengesetzter Richtung erstreckt, wobei sich der Verstärkungsbereich (44) beispielsweise von einem Erweiterungsabschnitt (36) zum anderen erstreckt.

5. Erweiterbares Stützelement (28) nach einem der vorangehenden Ansprüche, wobei in der Stützfläche (40) auf einem bestimmten Bereich des Umfangs des erweiterbaren Stützelements (28) eine Nut (52) ausgebildet ist, wobei die Nut (52) beispielsweise einen halbkreisförmigen Querschnitt hat.

6. Erweiterbares Stützelement (28) nach Anspruch 5, wobei der Stützabschnitt (38) einen zu der Nut (52) komplementär geformten Verstärkungsbereich (44) umfasst, der sich in entgegengesetzter Richtung zur Stützfläche (40) erstreckt.

7. Erweiterbares Stützelement (28) nach einem der vorangehenden Ansprüche, wobei die abgeschrägten Ausnehmungsbereiche (42) eine Fase zwischen den Erweiterungsabschnitten und der Stützfläche (40) bilden, beispielsweise indem sie einen Winkel zwischen 20° und 40°, vorzugsweise von 30°, mit den Erweiterungsabschnitten (36) bilden.

8. Vorrichtung zum Versiegeln (6) eines Deckels oder eines Bodens einer Verpackung auf einem Verpackungskörper durch Schmelzen eines reaktivierbaren Materials mittels eines Versiegelungsstempels (8), wodurch die Verbindung zwischen den Wänden des Bodens (4) oder des Deckels (50) und des Körpers (2) erlaubt wird, umfassend:
- ein allgemein polygonales erweiterbares Stützelement (28), das aus Elastomer hergestellt ist,
- eine Matrize zum Formen (16) eines Bodens (4) oder eines Deckels (50), die dazu bestimmt ist, einen von dem Versiegelungsstempel (8) eingedrückten Boden (4) oder Deckel (50) aufzunehmen;
- eine Gegen-Matrize (26), die zum Aufnehmen eines Verpackungskörpers (2) bestimmt ist, umfassend eine Aufnahme (29), die das erweiterbare Stützelement (28) aufnimmt, das sich gegenüber einer zu versiegelnden Zone des Körpers (2) der Verpackung und dem Versiegelungsstempel (8) gegenüber befindet; und
- Mittel zum Aufblasen (P1) des erweiterbaren Stützelements (28) über den Aufblashohlraum (30), die ausgelegt sind, um die Erweiterung der Erweiterungsabschnitte (36) derart zu bewirken, dass die Erweiterung der Erweiterungsabschnitte (26) das Inkontaktversetzen der Stützfläche (40) mit dem Verpackungskörper (2) bewirkt,
**dadurch gekennzeichnet, dass** das erweiterbare Stützelement (28) im Querschnitt ein Profil aufweist, das zwei allgemein längliche parallele Erweiterungsabschnitte (36) umfasst, die sich entlang einer Erweiterungsrichtung (E) erstrecken,
wobei die Erweiterungsabschnitte (36) jeweils an einem ihrer Enden (36E) mit einem Stützabschnitt (38) derart verbunden sind, dass die Erweiterungsabschnitte und der Stützabschnitt zwischen sich einen Aufblashohlraum (30) des erweiterbaren Stützelements (28) definieren,
wobei die Erweiterungsabschnitte (36) derart ausgelegt sind, dass sie sich beim Aufblasen des erweiterbaren Stützelements (28) entlang der Erweiterungsrichtung (E) verlängern,
wobei der Stützabschnitt (38) eine freie, im Wesentlichen ebene Stützfläche (40) umfasst, die ausgelegt ist, um mit dem Verpackungskörper (2) in Kontakt zu kommen, wobei sich die Stützfläche (40) entlang einer zu der Erweiterungsrichtung (E) im Wesentlichen senkrechten Ebene erstreckt und wobei der Stützabschnitt (38) vorzugsweise an den Verbindungen mit den Erweiterungsabschnitten (36) abgeschrägte Ausnehmungsbereiche (42) umfasst, wobei das erweiterbare Stützelement (28) ferner Haltelippen (46, 48) umfasst, die sich von den dem Stützabschnitt (38) entgegengesetzten Enden der Erweiterungsabschnitte (36F) entlang einer zu der Erweiterungsrichtung (E) im Wesentlichen senkrechten Richtung erstrecken.

9. Vorrichtung zum Versiegeln (6) eines Bodens (4) einer Verpackung auf einem Verpackungskörper (2) nach Anspruch 8, umfassend Mittel zum Vakuumieren (V1, 22) eines Volumens (V) zwischen dem Verpackungskörper (2), einem in dem Körper (2) enthaltenen Produkt und dem Boden (4), wenn der Körper (2) in die Gegen-Matrize (26) eingesetzt ist und der Boden (4) in die Matrize (16) eingesetzt ist.

10. Verfahren zum Versiegeln eines Deckels oder eines Bodens einer Kartonverpackung auf einem Verpackungskörper durch Schmelzen eines Materials mittels eines Versiegelungsstempels (8), wodurch die Verbindung zwischen den Wänden des Bodens (4) oder des Deckels (50) und des Körpers (2) erlaubt wird, mit Hilfe einer Versiegelungsvorrichtung (6) nach einem der Ansprüche 8 oder 9, umfassend die folgenden Schritte:
- Einsetzen eines Bodens (4) oder eines Deckels (50) durch Eindrücken mittels des Versiegelungsstempels (8) in eine Matrize (16) zum Formen des Bodens (4) oder des Deckels (50) gegenüber von einer Gegen-Matrize (26), die mit einer Aufnahme (29) versehen ist, in der das erweiterbare Stützelement (28) platziert ist;
- Aufblasen des erweiterbaren Stützelements (28) über den Aufblashohlraum (30), um die Erweiterung der Erweiterungsabschnitte (26) derart zu bewirken, dass die Erweiterung der Erweiterungsabschnitte (26) das Inkontaktversetzen der Stützfläche (40) mit dem Verpackungskörper (2) gegenüber von dem Versiegelungsstempel (8) bewirkt;
- Versiegeln des Bodens oder des Deckels auf dem Verpackungskörper in der Versiegelungszone, die sich sowohl dem Versiegelungsstempel (8) als auch dem erweiterbaren Stützelement (28) gegenüber befindet, und
- Vakuumieren des erweiterbaren Stützelements (28) derart, dass der Rückzug des erweiterbaren Stützelements (28) in seine Aufnahme (34) bewirkt wird.

11. Verfahren zum Versiegeln eines Deckels oder eines Bodens einer Verpackung auf einem Verpackungskörper nach Anspruch 10, wobei das Aufblasen des erweiterbaren Stützelements (28) durch Einleiten von Gas, beispielsweise von Luft, oder von Wärmeträgerfluid in den Aufblashohlraum (30) mit einem vorher festgelegten Aufblasdruck erfolgt.

12. Verfahren zum Versiegeln eines Deckels oder eines Bodens einer Verpackung auf einem Verpackungskörper nach Anspruch 10 oder 11, wobei nach dem Schritt des Einsetzens des Bodens (4) oder des Deckels (50) in die Matrize (16) und vordem Schritt des Aufblasens des erweiterbaren Stützelements (28) ein Voraufblasen des erweiterbaren Stützelements (28) durchgeführt wird, um die Erweiterung der Erweiterungsabschnitte (26) derart zu bewirken, dass die Erweiterung der Erweiterungsabschnitte (26) das Inkontaktversetzen der Stützfläche (40) mit dem Verpackungskörper (2) bewirkt, wobei das Voraufblasen des erweiterbaren Stützelements (28) durch Einleiten von Gas, beispielsweise von Luft, oder von Wärmeträgerfluid in den Aufblashohlraum (30) mit einem vorher festgelegten Voraufblasdruck unter dem Aufblasdruck durchgeführt wird.

13. Verfahren zum Versiegeln eines Deckels oder eines Bodens einer Verpackung auf einem Verpackungskörper nach Anspruch 11, wobei nach dem Schritt des Aufblasens des erweiterbaren Stützelements (28) und vor dem Schritt des Vakuumierens des erweiterbaren Stützelements (28) ein Schritt des Teilentleerens des erweiterbaren Stützelements (28) durchgeführt wird, wobei der Druck des Gases oder des Wärmeträgerfluids, das in den Aufblashohlraum (30) eingeleitet wurde, auf einen vorher festgelegten Wert unter dem Aufblasdruck gesenkt wird.

## Claims

1. An extensible bearing element (28) intended to be positioned in a tool for sealing a bottom (4) or a lid (50) of a cardboard package on a body (2) of said package by melting using a sealing stamp (8) of a reactivatable material allowing the bonding between the walls of the bottom (4) or the lid (50) and the body (2); the bearing element having a generally polygonal shape and being preferably made from an elastomer and having a profile in cross-section comprising two extension sections (36) with a parallel generally elongated shape extending along an extension direction (E),
the extension sections (36) each being connected, at one of their ends (36E), to a bearing section (38), such that the extension sections and the bearing section define an inflation cavity (30) of the extensible bearing element (28) between them,
the extension sections (36) being configured so as to extend along the extension direction (E) during the inflation of the extensible bearing element (28),
the bearing section (38) comprising a substantially flat free bearing surface (40), configured to come into contact with the packaging body (2), the bearing surface (40) extending along a plane substantially normal to the extension direction (E) across from the sealing stamp (8) and
preferably, the bearing section (38) comprising beveled release portions (42) at the junctions with the extension sections (36),
said extensible bearing element (28) further comprising maintaining lips (46, 48) extending, from the ends of the extension sections (36F) opposite the bearing section (38), along a direction substantially normal to the extension direction (E).

2. The extensible bearing element (28) according to claim 1, **characterized in that** the bearing element comprises outer maintaining lips (46) extending, from the ends of the extension sections (36F) opposite bearing section (36), along a direction substantially normal to the extension direction (E) moving away toward the outside of the inflation cavity (30).

3. The extensible bearing element (28) according to one of claims 1 or 2, **characterized in that** the bearing element comprises inner maintaining lips (48) extending, from the ends of the extension sections (36F) opposite the bearing section, along a direction substantially normal to the extension direction (E), toward the inside of the inflation cavity (30).

4. The extensible bearing element (28) according to any one of the preceding claims, wherein the bearing section (38) comprises a concave reinforcing portion (44) extending in the direction away from the bearing surface (40), the reinforcing portion (44) for example extending from one extension (36) to the other.

5. The extensible bearing element (28) according to any one of the preceding claims, wherein a groove (52) is formed in the bearing surface (40) on a determined portion of the circumference of the extensible bearing element (28), the groove (52) for example having a semicircular section.

6. The extensible bearing element (28) according to claim 5, wherein the bearing section (38) comprises a reinforcing portion (44) with a shape complementary to the groove (52) extending in the direction away from the bearing surface (40).

7. The extensible bearing element (28) according to any one of the preceding claims, wherein the beveled release portions (42) form a chamfer between the extension sections and the bearing surface (40), for example forming an angle between 20° and 40°, preferably 30° with the extension sections (36).

8. A device (6) for sealing a lid or a bottom of a package on a cardboard package body by melting a reactivatable material using a sealing stamp (8) allowing the bonding between the walls of the bottom (4) or the lid (50) and the body (2) comprising:
- an extensible bearing element (28) with a generally polygonal shape and made from an elastomer,
- a die (16) for shaping a bottom (4) or a lid (50), intended to receive a bottom (4) or a lid (50) stamped by the sealing stamp (8);
- a counter-die (26), intended to receive a package body (2), comprising a housing (29) receiving the extensible bearing element (28) located across from a sealing zone of the body (2) of the package and across from the sealing stamp (8); and
- means (P1) for inflating the extensible bearing element (28) by means of the inflation cavity (30) configured to cause the extension of the extension sections (36), such that the extension of the extension sections (26) causes the bearing surface (40) to come into contact against the box body (2),
**characterized in that** the extensible bearing element (28) has a profile in cross-section comprising two extension sections (36) with a parallel generally elongated shape extending along an extension direction (E),
the extension sections (36) each being connected, at one of their ends (36E), to a bearing section (38), such that the extension sections and the bearing section define an inflation cavity (30) of the extensible bearing element (28) between them,
the extension sections (36) being configured so as to extend along the extension direction (E) during the inflation of the extensible bearing element (28),
the bearing section (38) comprising a substantially flat free bearing surface (40), configured to come into contact with the package body (2), the bearing surface (40) extending along a plane substantially normal to the extension direction (E), and preferably, the bearing section (38) comprising beveled release portions (42) at the junctions with the extension sections (36), said extensible bearing element (28) further comprising maintaining lips (46, 48) extending, from the ends of the extension sections (36F) opposite the bearing section (38), along a direction substantially normal to the extension direction (E).

9. The device (6) for sealing a bottom (4) of the package on a package body (2) according to claim 8, comprising means for creating a vacuum (V1, 22) in a volume (V) comprised between the package body (2), a product contained in the body (2) and the bottom (4), once the body (2) is inserted into the counter-die (26) and the bottom (4) is inserted into the die (16).

10. A method for sealing a lid or a bottom of a cardboard package on a package body by melting a material using a sealing stamp (8) allowing the bonding between the walls of the bottom (4) or the lid (50) and the body (2) using a sealing device (6) according to any one of claims 8 or 9, comprising the following steps:
- introducing a bottom (4) or a lid (50) by stamping using the sealing stamp (8) into a die (16) for shaping the bottom (4) or the lid (50) across from a counter-die (26) provided with a housing (29) in which the extensible bearing element (28) is placed;
- inflating the extensible bearing element (28) by means of the inflation cavity (30) to cause the extension of the extension sections (26), such that the extension of the extension sections (26) causes the bearing surface (40) to come into contact against the box body (2) across from the sealing stamp (8);
- sealing the bottom or the lid on the package body in the sealing zone located across from both the sealing stamp (8) and the extensible bearing element (28); and
- placing the extensible bearing element (28) under vacuum so as to cause the extensible bearing element (28) to withdraw into its housing (34).

11. The method for sealing a lid or a bottom of a package on a package body according to claim 10, wherein the inflation of the extensible bearing element (28) is done by introducing gas, for example air, or heat transfer fluid into the inflation cavity (30) at a predetermined inflation pressure.

12. The method for sealing a lid or a bottom of a package on a package body according to claim 10 or 11, wherein, after introducing the bottom (4) or the lid (50) into the die (16), and before the step for inflating the extensible bearing element (28), the extensible bearing element (28) is pre-inflated in order to cause the extension of the extension sections (26), such that the extension of the extension sections (26) causes the bearing surface (40) to come into contact against the box body (2), the pre-inflation of the extensible bearing element (28) being done by introducing gas, for example air, or heat transfer fluid into the inflation cavity (30) at a predetermined pre-inflation pressure lower than the inflation pressure.

13. The method for sealing a lid or a bottom of a package on a package body according to claim 11, wherein, after the step for inflating the extensible bearing element (28), and before the step for placing the extensible bearing element (28) under vacuum, a step is carried out for partial deflation of the extensible bearing element (28), in which the pressure of the gas or the heat transfer fluid introduced into the inflation cavity (30) is reduced to a predetermined value below the inflation pressure.
